# EUROPEAN PATENT SPECIFICATION

(11) **EP 1 424 858 B1**
(45) Date of publication and mention of the grant of the patent: **02.01.2008**
(21) Application number: 03257381.8
(22) Date of filing: 21.11.2003
(51) Int. Cl.: H04N 9/31, F21V 9/10, G02B 7/00, F21S 10/00

(54) **Color wheel fixing**
Farbradsicherung
Fixation de disque à filtre chromatique

(30) Priority: 21.11.2002 KR 2002034832
(43) Date of publication of application: 02.06.2004
(73) Proprietor: SAMSUNG ELECTRONICS CO., LTD., Suwon-City, Kyungki-do (KR)
(72) Inventor: Lee, Heong-seog, Suwon-si, Gyeonggi-do (KR)
(74) Representative: Grey, Ian Michael

(56) References cited:
- US-A1- 2002 003 704

## Description

The present invention relates to a fixing structure for fixing a colour wheel to a base of a projector, said colour wheel comprising a colour rotating disc having a plurality of colour filters selectively transmitting light of a predetermined wavelength among white light emitted from a lamp and rotatably installed such that the respective colour filters are sequentially arranged on an optical path, and a driving source which drives the colour rotating disc to rotate, said fixing structure comprising a first cover member coupled to the base, a second cover member coupled to the first cover member and together therewith encompassing the colour wheel, a bracket to which the colour wheel is coupled, a coupling unit to couple the bracket to the second cover member.

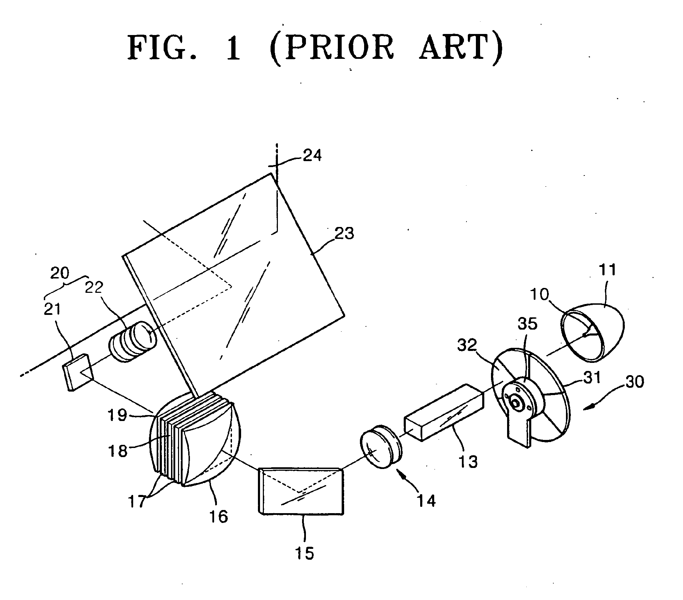

Figure 1 is a perspective view illustrating an optical system of a colour liquid crystal display (LCD) projector which can produce a colour image using a single LCD panel. In Figure 1, white light emitted from a lamp 10 and reflected by a mirror 11 passes through a colour wheel 30 rotatably installed in front of the lamp 10. The colour wheel comprises red, blue and green filters 32 and sequentially filters the white light to produce red, blue and green beams as it rotates.

The colour wheel 30 includes a colour rotating disc 31 rotatably installed such that the colour filters 32 are sequentially arranged on an optical path and a motor 35 for rotating the colour rotating disc 31.

The filtered light is passed through a rectangular-section glass rod 13 to give the beam a rectangular cross-section. After emerging from the rod 13, the light passes through an image lens 14, a cold mirror 15, which reflects visible light but transmits infrared light, and a lens 16 which matches the rectangular beam to the area of an LCD device. The image generating unit includes the LCD device 18 and a pair of polarization panels 17 provided on respective, opposite sides of the LCD device 18.

The image generating unit generates an image using the light emitted from the lamp 10 according to the operation of the LCD device 18.

The modulated light output by the image generating unit passes through a focusing lens 19 and a projection unit 20. The projection unit 20 includes a mirror 21 and a plurality of lenses 22. Then, the modulated light is reflected by a mirror 23 behind a screen 24 which reflects the modulated light onto the screen 24 so that it can be viewed.

Since the colour wheel 30 is a rotating body which rotates at over 9000 rpm., noise is generated by the rotation of the colour rotating disc 31 and vibration of the shaft (not shown) supporting the colour rotating disc 31.

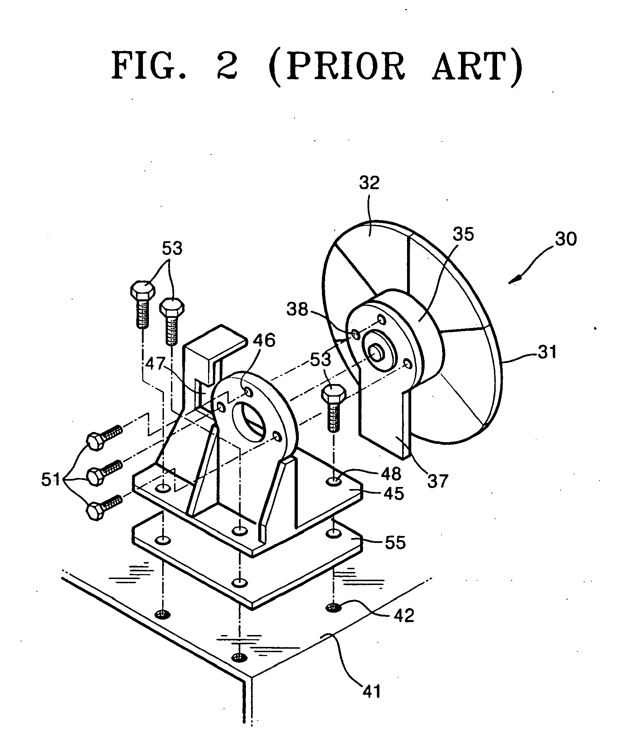

To reduce the noise, a colour wheel fixing structure as shown in Figure 2 has been suggested.

Referring to Figure 2, a conventional colour wheel fixing structure includes a holder 45 for mounting the colour wheel 30 to a base 41. A plurality of first threaded holes 38 are provided in a bracket 37 supporting the motor 35. A plurality of first through-holes 46 are provided in the holder 45 at positions corresponding to respective first threaded holes 38. Thus, the colour wheel 30 can be fixed to the holder 45 by screwing a plurality of first screws 51 into the first threaded holes 38 through the first through-holes 46. An opening portion 47, through which light passing through the colour wheel 30 can pass, is provided in the holder 45.

The holder 45 is fixedly installed on the base 41. To install the holder 45 on the base 41, a plurality of second through-holes 48 are provided at the holder 45 and a plurality of second threaded holes 42 are formed in the base 41 at positions corresponding to the second through holes 48. Thus, the holder 45 can be fixed to the base 41 by screwing a plurality of second screws 53 into the second threaded holes 42 through the second through-holes 48. A buffer pad 55 is provided between the base 41 and the holder 45. Thus, as the buffer pad 55 absorbs vibrations of the colour wheel 30 to a degree, noise generated from the colour wheel 30 is reduced.

When the buffer pad 55 is provided to reduce noise as in the conventional colour wheel fixing structure having the above structure, the diameter of the colour rotating disc 31 should not be more than 45 mm and rotate at a low speed.

In order to produce a high quality image in a projector, a higher colour sequencing rate is required. To meet this need, the number of the colour filters 32 is increased with a concomitant increase in the diameter of the colour rotating disc 31 and simultaneously the speed of rotation of the colour rotation disc 31 is increased. Accordingly, in the colour wheel 30, the colour rotating disc 31 needs to have a diameter of about 50 mm or more and a high rotation speed of over 9000 rpm. When the diameter is increased and a high speed rotation is performed, the noise cannot be reduced by the conventional buffer pad 55 only.

Further, when a colour wheel assembly in which the colour wheel 30 and the holder 45 are coupled is assembled on the base 41 with other optical elements, since the buffer pad 55 is provided, the time to assemble the optical elements with respect to the base 41 increases.

A colour wheel assembly and colour sequential display device is known in the art from US 2002/0003704.

It will be appreciated that the present invention may be used instead of the buffer pad for reducing the noise of conventional relatively small and slow colour wheels.

A colour wheel unit according to the present invention is characterised by a buffer member provided between the first and second cover members and between the bracket and the second cover member and which reduces vibration generated from the colour wheel and transferred to the second cover member via the bracket and vibration transferred from the second cover member to the first cover member.

In a preferred embodiment, the coupling unit comprises a plurality of coupling holes formed in the second cover member, a plurality of through-holes formed in the buffer member at positions corresponding to the coupling holes, a plurality of coupling grooves formed in the bracket, a plurality of bushings inserted in the through-holes such that part of an outer side of each of the bushings contacts each of the coupling grooves, a plurality of screws coupled to the coupling holes by passing through the bushings and the through-holes to couple the bracket to the second cover, and a plurality of buffer washers inserted around the screws and arranged at the rear of the bracket to dampen vibration of the colour wheel transferred through the bracket.

The invention also preferably comprises a glass rod holder for holding one side of a glass rod which makes light of a predetermined colour transmitting the colour wheel uniform at a predetermined position of the bracket.

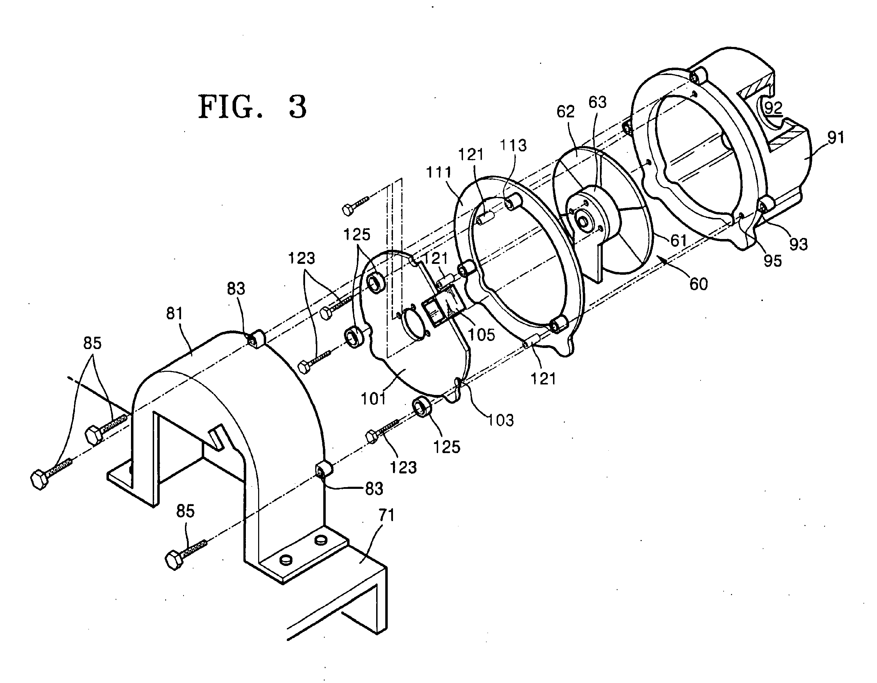

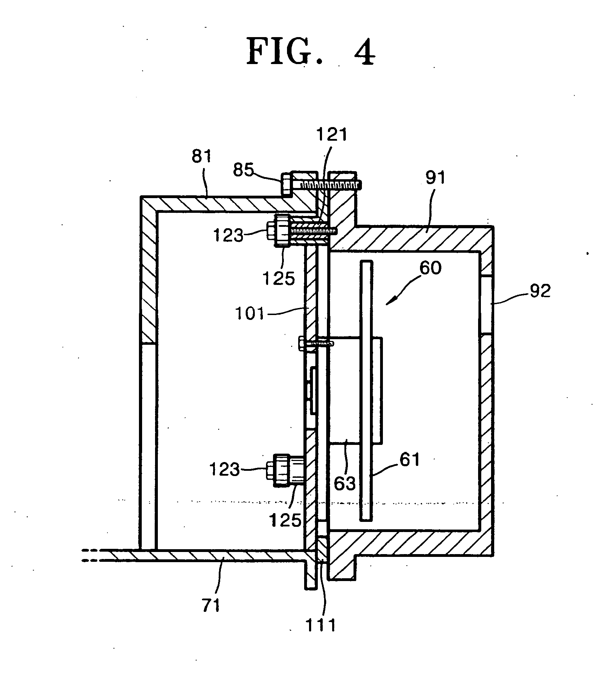

An embodiment of the present invention will now be described, by way of example, with reference to Figures 3 and 4 of the accompanying drawings, in which:
Figure 1 is a perspective view illustrating the optical structure of a colour projector to produce a colour image using a single LCD panel;
Figure 2 is an exploded perspective view illustrating a conventional colour wheel for a projector and a fixing structure therefor;
Figure 3 is an exploded perspective view illustrating a colour wheel fixing structure for a projector according to the present invention; and
Figure 4 is a sectional view illustrating the colour wheel fixing structure of Figure 3.

Referring to Figures 3 and 4, in a colour wheel fixing structure for a projector according to the present invention, a colour wheel unit 60 is fixed to a base 71 in a projector. The colour wheel unit 60 comprises a colour rotating disc 61 which is rotatably installed, and a motor 63 for rotating the colour rotating disc 61 to rotate. A plurality of colour filters 62 are arranged in the colour rotating disc 61 for sequentially filtering white light from a lamp, like the lamp 10 of Figure 1 to produce sequentially red, blue and green beams.

The colour wheel fixing structure comprises first and second cover members 81, 91 covering the colour wheel 60, a bracket 101 to which the colour wheel 60 is coupled, a coupling unit to couple the bracket 101 to the second cover member 91, and a buffer member 111 which reduces the transmission of vibrations from the colour wheel 60 through the bracket 101 and from the second cover member 91 to the first cover member 81.

The first cover member 81 is directly coupled to the base 71 but may be indirectly fixed to the base 71 by being coupled to a housing (not shown) housing a glass rod and an LCD panel, similar to or the same as the glass rod 13 and the LCD panel 18 in Figure 1.

The second cover member 91 and the first cover member 81 are coupled to each other and together encompass the colour wheel 60. A plurality of first through-holes 83 and a plurality of first threaded holes 93 are formed in the first cover member 81 and the second cover member 91 respectively. The second cover member 91 is coupled to the first cover member 81 by screwing first screws 85 into the first threaded holes 93 through the first through-holes 83. The buffer member 111 is disposed between the first and second cover members 81 and 91 to reduce the transfer of vibration from the second cover member 91 to the first cover member 81. The second cover member 91 has a light passing hole 92 to provide a path for light from the lamp and to the colour filters 62. Thus, the colour wheel 60 is vibrationally and acoustically isolated by the first and second cover members 81, 91.

The buffer member 111 is provided between the first and second cover members 81, 91 and between the bracket 101 and the second cover member 91. The buffer member 111 is a ring-shaped rubber pad and the shape and size of the buffer member 111 are such that it conforms the first and second cover members 81, 91. The bracket 101 smaller than the buffer member 111 so that it can be disposed inside when the second cover member 91 is coupled to the first cover member 81.

The colour wheel 60 is directly coupled to the bracket 101. Thus, when vibration is generated in the shaft (not shown) of the colour wheel 60, the vibration is directly transferred to the bracket 101. Since the bracket 101 is coupled to the second cover member 91 by the coupling unit C with the buffer member 111 interposed therebetween, the vibration is prevented from being transferred to the second cover member 91.

The coupling unit C comprises a plurality of second threaded holes 95 formed in the second cover member 91, a plurality of second through-holes 113 formed in the buffer member 111 at positions corresponding to the second threaded holes 95, and a plurality of coupling notches 103 formed in the bracket 101. The coupling unit also includes a plurality of bushings 121, a plurality of second screws 123, and a plurality of buffer washers 125. The bushings 121 are inserted into respective ones of the second through-holes 113 such that part of the outer side of each of the bushings 121 contacts each of the second coupling notches 103. The second screws 123 are coupled to the through-holes 113 by passing through the bushings 121 and the second through-holes 113 so that the bracket 101 is coupled to the second cover member 91. Each of the buffer washers 125 is inserted around each of the second screws 123 and disposed at the rear of the bracket 101 so that the vibration of the colour wheel 60 transferred via the bracket 101 is damped,

A glass rod holder 105 is arranged such that a light incident surface of a glass rod, held by the holder 105, is close to the colour wheel 60 to give the light passing through the colour wheel 60 a rectangular cross-section. Thus, considering the feature, the colour wheel fixing structure comprises a glass rod holder 105 holding one end of a glass rod which extends through an aperture in the first cover member 81.

As described above, in the colour wheel fixing structure consistent with the present invention, when the diameter and the speed of rotation of the colour wheel are increased to realize a high quality projector, since the buffer member is provided between the first and second cover members, the transfer of the noise due to the rotation of the colour rotating disc of the colour wheel and vibration of the shaft of the colour wheel can be reduced.

Furthermore, in the above colour wheel fixing structure, since a colour wheel assembly is completed by coupling the colour wheel and the buffer member in the first and second cover members and the colour wheel assembly is directly coupled to the base without additional constituent elements, the time to assemble the colour wheel assembly to the base can be reduced.

## Claims

1. A fixing structure for fixing a colour wheel (60) to a base (71) of a projector, said colour wheel (60) comprising a colour rotating disc (61) having a plurality of colour filters (62) selectively transmitting light of a predetermined wavelength among white light emitted from a lamp and rotatably installed such that the respective colour filters (62) are sequentially arranged on an optical path, and a driving source (63) which drives the colour rotating disc (61) to rotate, said fixing structure comprising a first cover member (81) coupled to the base (71), a second cover member (91) coupled to the first cover member (81) and together therewith encompassing the colour wheel (60), a bracket (101) to which the colour wheel (60) is coupled, a coupling unit to couple the bracket (101) to the second cover member (91) **characterised by** a buffer member (111) provided between the first and second cover members (81,91) and between the bracket (101) and the second cover member (91) and which reduces vibration generated from the colour wheel (60) and transferred to the second cover member (91) via the bracket (101) and vibration transferred from the second cover member (91) to the first cover member (81).

2. The fixing structure as claimed in claim 1 wherein the coupling unit comprises a plurality of coupling holes (95) formed in the second cover member (91), a plurality of through-holes (113) formed in the buffer member (111) at positions corresponding to the coupling holes (95), a plurality of coupling grooves (103) formed in the bracket (101), a plurality of bushings (121) inserted in the through-holes (113) such that part of an outer side of each of the bushings (121) contacts each of the coupling grooves (103), a plurality of screws (123) coupled to the coupling holes (95) by passing through the bushings (121) and the through-holes (113) to couple the bracket (101) to the second cover (91) and a plurality of buffer washers (125) inserted around the screws (123) and arranged at the rear of the bracket (101) to dampen vibration of the colour wheel (60) transferred through the bracket (101).

3. The fixing structure as claimed in claim 1 or claim 2 further comprising a glass rod holder (105) for holding one side of a glass rod which makes light of a predetermined colour transmitting the colour wheel (60) uniform at a predetermined position of the bracket (101).

## Patentansprüche

1. Befestigungsanordnung zum Befestigen eines Farbrads (60) an einer Unterlage (71) eines Projektionsapparats, wobei das Farbrad (60) eine rotierende Farbscheibe (61) mit einer Vielzahl von Farbfiltern (62), die selektiv Licht einer vorgegebenen Wellenlänge aus weißem Licht, das von einer Lampe ausgesendet wird, übertragen und so drehbar eingebaut sind, dass die entsprechenden Farbfilter (62) aufeinander folgend in einem Strahlengang angeordnet sind, und eine Antriebsquelle (63), die die rotierende Farbscheibe (61) zur Drehung antreibt, umfasst, wobei die Befestigungsanordnung ein mit der Unterlage (71) verbundenes erstes Abdeckungselement (81), ein mit dem ersten Abdeckungselement (81) verbundenes zweites Abdeckungselement (91), wobei beide zusammen das Farbrad (60) umfassen, eine Halterung (101), die mit dem Farbrad (60) verbunden ist, ein Anschlussstück zum Verbinden der Halterung (101) mit dem zweiten Abdeckungselement (91) umfasst, **gekennzeichnet durch** ein Pufferelement (111), das zwischen dem ersten und dem zweiten Abdeckungselement (81, 91) und zwischen der Halterung (101) und dem zweiten Abdeckungselement (91) bereitgestellt wird und das die von dem Farbrad (60) erzeugten und über die Halterung (101) auf das zweite Abdeckungselement (91) übertragenen Schwingungen und die von dem zweiten Abdeckungselement (91) zu dem ersten Abdeckungselement (81) übertragenen Schwingungen verringert.

2. Befestigungsanordnung nach Anspruch 1, wobei das Anschlussstück eine Vielzahl von Anschlussbohrungen (95), die in dem zweiten Abdeckungselement (91) gebildet sind, eine Vielzahl von Durchgangsbohrungen (113), die in dem Pufferelement (111) an Positionen, die den Anschlussbohrungen (95) entsprechen, gebildet sind, eine Vielzahl von Verbindungskerben (103), die in der Halterung (101) gebildet sind, eine Vielzahl von Reduzierringen (121), die so i die Durchgangsbohrungen (113) eingeführt sind, dass ein Teil einer Außenseite von jedem Reduzierring (121) jede Verbindungskerbe (103) berührt, eine Vielzahl von Schrauben (123), die mit den Durchgangsbohrungen (95) verbunden sind, wobei sie zum Verbinden der Halterung (101) mit der zweiten Abdeckung (91) durch die Reduzierringe (121) und die Durchgangsbohrungen (113), durchgeführt sind, und eine Vielzahl von Pufferscheiben (125), die um die Schrauben (123) herum eingeführt sind und zum Dämpfen der durch die Halterung (101) übertragenen Schwingungen des Farbrads (60) an der Rückseite der Halterung (101) angeordnet sind, umfasst.

3. Befestigungsanordnung nach Anspruch 1 oder Anspruch 2, ferner umfassend eine Haltervorrichtung (105) für eine Glasstange, zum Aufnehmen von einer Seite einer Glasstange, die Licht mit einer vorgegebenen Farbe, das durch das Farbrad (60) übertragen wird, an einer vorgegebenen Position der Halterung (101) gleichförmig macht.

## Revendications

1. Structure de fixation pour fixer une roue chromatique (60) sur une base (71) d'un projecteur, ladite roue chromatique (60) comportant un disque rotatif chromatique (61) ayant une pluralité de filtres colorés (62) transmettant sélectivement de la lumière d'une longueur d'onde prédéterminée parmi de la lumière blanche émise par une lampe, et installé de manière rotative de telle sorte que les filtres colorés respectifs (62) sont agencés séquentiellement sur un trajet optique, et une source d'entraînement (63) qui entraîne le disque rotatif chromatique (61) en rotation, ladite structure de fixation comportant un premier élément de recouvrement (81) couplé à la base (71), un second élément de recouvrement (91) couplé au premier élément de recouvrement (81) et, ensemble avec celui-ci, englobant la roue chromatique (60), un étrier (101) auquel la roue chromatique (60) est couplée, une unité de couplage pour coupler l'étrier (101) au second élément de recouvrement (91), **caractérisé par** un élément tampon (111) agencé entre les premier et second éléments de recouvrement (81, 91) et entre l'étrier (101) et le second élément de recouvrement (91), et qui réduit les vibrations générées par la roue chromatique (60) et transférées au second élément de recouvrement (91) via l'étrier (101), et les vibrations transférées à partir du second élément de recouvrement (91) vers le premier élément de recouvrement (81).

2. Structure de fixation selon la revendication 1, dans laquelle l'unité de couplage comporte une pluralité de trous de couplage (95) formés dans le second élément de recouvrement (91), une pluralité de trous traversants (113) formés dans l'élément tampon (111) dans des positions en correspondance avec les trous de couplage (95), une pluralité de gorges de couplage (103) formées dans l'étrier (101), une pluralité de manchons (121) insérés dans les trous traversants (113) de telle sorte qu'une partie d'un côté extérieur de chacun des manchons (121) vient en contact avec chacune des gorges de couplage (103), une pluralité de vis (123) couplées aux trous de couplage (95) en passant à travers les manchons (121) et les trous traversants (113) pour coupler l'étrier (101) au second recouvrement (91), et une pluralité de rondelles tampons (125) insérées autour des vis (123) et agencées à l'arrière de l'étrier (101) pour amortir des vibrations de la roue chromatique (60) transférées à travers l'étrier (101).

3. Structure de fixation selon la revendication 1 ou 2, comportant en outre un support de tige de verre (105) pour maintenir un côté d'une tige de verre qui rend la lumière d'une couleur prédéterminée, transmise par la roue chromatique (60), uniforme dans une position prédéterminée de l'étrier (101).
